# NEUE EUROPÄISCHE PATENTSCHRIFT

(11) **EP 0 722 915 B2**
(45) Veröffentlichungstag und Bekanntmachung des Hinweises auf die Entscheidung über den Einspruch: **02.01.2002**
(45) Hinweis auf die Patenterteilung: 19.05.1999
(21) Anmeldenummer: 96100492.6
(22) Anmeldetag: 15.01.1996
(51) Int. Cl.: C04B 24/06, C04B 28/06

(54) **Expansionsbindemittel**
Expansion binder
Liant expansif

(30) Priorität: 16.01.1995 DE 19501074
(43) Veröffentlichungstag der Anmeldung: 24.07.1996
(73) Patentinhaber: Anneliese Zementwerke AG, D-50320 Ennigerloh (DE)
(72) Erfinder: Esser, Peter, Dr., D-48153 Everswinkel (DE)
(74) Vertreter: Eggert, Hans-Gunther, Dr.

(56) Entgegenhaltungen:
- US-A- 4 328 036
- US-A- 4 921 537
- CHEMICAL ABSTRACTS, vol. 106, no. 18, 4.Mai 1987 Columbus, Ohio, US; abstract no. 143042h, XP000184241 & DATABASE WPI Week 8640 Derwent Publications Ltd., London, GB; AN 86-262615 & JP 61 191 552 A (NIPPON OILS AND FATS) 26.August 1986
- DATABASE WPI Week 8420 Derwent Publications Ltd., London, GB; AN 84-122816 XP002022463 & JP 59 057 940 A (DENKI KAGAKU KOGYO KK) 3.April 1984
- F. M. LEA: "The Chemistry of Cement and Concrete" 1970 , EDWARD ARNOLD PUBLISHERS LTD , LONDON, GB XP002022462 * Seite 534, Absatz 3 *
- ACI Materials Journal, Jan-Feb. 1994, Seiten 46-53

## Beschreibung

Die Erfindung betrifft ein Expansionsbindemittel (Quellzement).

Expansionszemente sind im erweiterten Sinne Kompositzemente, denen eine oder mehrere Quellkomponenten zugesetzt werden. Die Quellkomponenten bewirken während des Hydratations- bzw. Erhärtungsprozesses eine Volumenexpansion (Quellung) des Quellzementsteins bzw. Quellzementbetons. Sie können in unterschiedliche Gruppen eingeteilt werden, je nachdem, durch welche chemische Reaktion die Quellung des erhärtenden Zementsteins verursacht wird. So kann die Quellung des Zementes während des Hydratationsvorganges im wesentlichen auf die Ettringitbildung (Quellkomponente auf aluminatisch-sulfatischer Basis), Monosulfatbildung (Quellkomponente auf aluminatisch-sulfatischer Basis) oder Hydroxidbildung (Quellkomponente auf Oxidbasis) zurückgeführt werden.

Quellkomponenten (Expansionsbindemittel) werden vorwiegend zur Kompensation der Schwindeigenschaft von Zement eingesetzt. Da das Ausmaß der Quellung durch Variation der Quellkomponenten und -mengen einstellbar ist, kann die Schwindung beispielsweise des hydratisierten Portlandzements (PZ) durch den überlagerten Quellprozeß in etwa ausgeglichen werden (schwindungskompensierter Quellzement).

Am häufigsten sind Expansionszemente des Typs M (sog. Michajlov-Zemente) auf Basis von Portlandzement.
In der Veröffentlichung *Microstructure of Highly Expansive Cement Pastes* in ACI Materials Journal, 1994, Seiten 46 bis 53 wurden u.a. Bohrzementmischungen aus Portlandzement und Tonerdezement (HAC), Calciumsulfathalbhydrat und Calciumhydroxid mit Zusätzen von Natriumcitrat und einem pulverförmigen "Superplasticizer" auf Basis von Naphthalinsulfonatkondensat und Flugasche hinsichtlich ihrer Hydratationsreaktionen untersucht. Mit dem Natriumcitrat sollte hierbei nur die sofortige Reaktion des Tonerdezements verhindert werden. Ein Einfluß auf die Ettringitbildung oder gar die Expansion wird nicht diskutiert und ist auch nicht erkennbar. Die Menge der aktiven Substanzen Natriumcitrat und Naphthalinsulfonatkondensat bleibt offen. Die bekannten Mischungen enthalten zusätzlich 3 % Kalkhydrat, was die zeitliche Abfolge der Bildung von Ettringit und des CSH/CAH-Gefüges erheblich beeinflussen kann.
Der Abhandlung ist keine Lehre zu entnehmen, wie die Reihenfolge der Bildung von Ettringit einerseits und den CSH/CAH-Phasen andererseits so gesteuert werden könnte, daß erstere bereits weitgehend abgeschlossen ist, wenn die Ausbildung des letzteren beginnt.

Die Aufgabe der vorliegenden Erfindung ist es, ein pumpfähiges und injizierbares Expansionsbindemittel bereitzustellen, das eine Volumenexpansion von 5 - 30 % bezogen auf den Ausgangszustand aufweist, dessen Verarbeitbarkeit mindestens 15 min beträgt und das möglichst früh eine hohe Festigkeit aufweist und das bei Feuchtigkeitszutritt nicht zerfällt.

Diese Aufgabe wird erfindungsgemäß durch ein Expansionsbindemittel vom Typ M gelöst, das Citronensäure, Weinsäure oder deren Alkalisalze, vorzugsweise das Lithium- oder Natriumsalz, enthält.

Eine weitere erfindungsgemäße Ausführungsform besteht aus einem Expansionszement des Typs M, der

| | |
|---|---|
| ≥ 50 | Gew.-% Portlandzement |
| 5 bis 25 | Gew.-% Tonerdezement |
| 7,5 bis 25 | Gew.-% Gips |
| 0,2 bis 2 | Gew.-% Verflüssiger |
| 0,01 bis 1 | Gew.-% Alkalicitrat oder -tartrat |

enthält.

Hierbei kann das Alkalicitrat vorzugsweise Lithium- oder Natriumcitrat sein.

Die Begriffe Portlandzement, Tonerdezement und Gips werden hier so verstanden, wie sie in den dem Durchschnittsfachmann bekannten Veröffentlichungen beschrieben sind. Insbesondere wird auf die einschlägigen DIN-Normen verwiesen (DIN 1164, DIN 1168, DIN 51043).

In einer bevorzugten Ausführungsform werden Al₂O₃-reiche Tonerdezemente eingesetzt, die in zahlreichen Veröffentlichungen beschrieben sind (J. Bensted, "High alumina cement", Zement-Kalk-Gips, 46, 560 - 566).

Der Zement ist weitgehend C₃A-frei. Darunter wird ein C₃A-Anteil von weniger als 3 Gew.-% verstanden. C₃A-arme Zemente werden bei gewöhnlichen Zementanwendungen eingesetzt, um eine Ettringitbildung zu verhindern, die im gewöhnlichen C₃A-haltigen Portlandzement durch Bindung von CaSO₄ aus umgebenden Wässern an das C₃A erfolgt und eine Aufblähung und Festigkeitsverminderung des Zements bewirkt (Sulfatangriff).
Erfindungsgemäß wird durch die Auswahl der Inhaltsstoffe eine Ettringitbildung angestrebt, um eine hohe Expansion zu erreichen.

Mit diesem Zementtyp lassen sich hohe Volumenexpansionen erzielen, bei einer verhältnismäßig niedrigen Dosierung der teuren Tonerdeschmelzkomponente.

Als Verflüssiger werden alle die Verbindungen bezeichnet, die vor allem durch ihre Herabsetzung der Oberflächenspannung des Wassers und der besseren Verteilung der feinen Feststoffe (hier Bindemittel) eine verflüssigende und wassereinsparende Wirkung haben. Als Verflüssiger werden alle die Stoffe eingesetzt, die dem Fachmann aus den einschlägigen Veröffentlichungen her bekannt sind (H. Reul, Handbuch Bauchemie, Verlag für chem. Industrie, H. Ziolkowsky KG, Augsburg 1991). Insbesondere werden Salze der Ligninsulfonsäure und Melamin- und Naphthalinformaldehyd-Kondensatsulfonate verwendet.

Die erfindungsgemäßen Expansionsbindemittel eignen sich besonders gut zur Verfüllung von Hohlräumen, vorzugsweise bei der Herstellung von Boden- oder Felsankern.

Bei Expansionszementen des Typs M gemäß dem Stand der Technik läuft die Bildung von Ettringit und der CSH/CAH-Phasen ohne besondere Steuerungsmaßnahmen ab (zu den Abkürzungen sei auf F. Keil, Zement, Springer-Verlag Berlin 1971 verwiesen). Ist die für die Festigkeit des Gefüges verantwortliche Portlandzement-Hydratation schneller als die Ettringitbildung, bildet sich ein festes Zementsteingefüge, das durch die spätere Expansionsreaktion zerstört werden kann. Bei einem verwendbaren Expansionszement sollte daher die Ettringitbildung weitgehend abgeschlossen sein, wenn die Ausbildung des CSH/CAH-Gefüges beginnt. Die erfindungsgemäße Zugabe von Citronensäure, Weinsäure oder ihrer Alkalisalze bewirkt eine zeitliche Trennung zwischen der Bildung von Ettringit und der CSH/CAH-Phasen. Die erfindungsgemäße Zugabe von Citronensäure oder ihrer Salze hat eine Volumenexpansion um mindestens den Faktor 2 gegenüber der Expansion der Nullmischung innerhalb der ersten drei Tage nach Wasserzugabe zur Folge. Bei geeigneter Dosierung der Citronensäure bzw. deren Salze ist nach diesen drei Tagen keine weitere Volumenexpansion mehr zu beobachten. Die aus dem erfindungsgemäßen Expansionsbindemittel hergestellten Prüfkörper sind dann auch unter Wasserlagerung langzeitstabil.

In den Beispielen werden die Eigenschaften der Expansionsbindemittel wie folgt bestimmt:
- Pumpfähigkeit: Ausbreitmaß von 20 cm nach DIN 1060.
- Volumenexpansion: Bestimmung der Volumenzunahme an Zementleimprismen nach DIN 1164, 4 x 4 x 16 cm³.
- Verarbeitungszeit: Erstarrungsanfang mit dem Vicat-Nadelgerät (DIN EN 196, Teil 3).
- Festigkeit: Druckfestigkeit an 4 x 4 16 cm³ Prismen (Abschleifen der Flächen nach Expansion nach DIN EN 196, Teil 1).
- Stabilität bei Feuchtigkeitszutritt: Wasserlagerung bei 20 °C, optische Begutachtung

Folgende Beispiele dienen zur Erläuterung der Erfindung:

### BEISPIEL 1 (Vergleichsversuch)

Ein Expansionsbindemittel aus

| | |
|---|---|
| 64,5 | Gew.-% Portlandzement PZ 35 F |
| 20 | Gew.-% Tonerdezement TSZ Secar 71 (Lafarge) |
| 15 | Gew.-% Gips (β-Halbhydrat) |
| 0,5 | Gew.-%Verflüssiger LH 152/92L (LH Bau-Chemie GmbH & Co. KG, Pyrmonter Str. 56, 32676 Lügde) |

mit einem W/F-Wert (Wasser/Feststoff-Wert) von 0,25 wird in einem DIN-Mischer gemäß DIN EN 196, Teil 1, aufbereitet.

Der aus diesem Expansionsbindemittel hergestellte Prüfkörper zeigte eine Volumenexpansion von 10 % nach einem Tag, zersetzte sich bereits aber bereits nach einer Lagerung von 4 Tagen mit 80 % relativer Luftfeuchtigkeit und 20 °C.

Die weiteren Eigenschaften dieses Expansionsbindemittels sind in Tabelle 1 angegeben.

### BEISPIEL 2

Ein Expansionsbindemittel aus

| | |
|---|---|
| 64,3 | Gew.-% Portlandzement PZ 35 F |
| 20 | Gew.-% Tonerdezement TSZ Secar 71 (Lafarge) |
| 14,5 | Gew.-% Gips (β-Halbhydrat) |
| 0,5 | Gew.%Verflüssiger LH 152/92L (BC Beton-Chemie GmbH & Co. KG, Pyrmonter Str. 56, 32676 Lügde) |
| 0,2 | Gew.-% Natriumcitrat |

mit einem W/F-Wert von 0,25 wird in einem DIN-Mischer gemäß DIN EN 196, Teil 1, aufbereitet.

Die Zugabe von 0,2 Gew.-% Natriumcitrat führt zu einer deutlich erhöhten Expansion von ca. 20 Vol.-% nach 2 Tagen. Das entstehende Gefüge ist auch bei Wasserlagerung stabil. Der Mörtel ist gut 20 min verarbeitbar bei pumpfähiger Konsistenz (s. Tab. 1).

### Beispiel 3

Ein Expansionsbindemittel aus

| | |
|---|---|
| 81,8 | Gew.-% Portlandzement PZ 45 F-HS |
| 10,0 | Gew.-% Tonerdezement TSZ Secar 71 (Lafarge) |
| 7,5 | Gew.-% Gips (β-Halbhydrat) |
| 0,5 | Gew.-%Verflüssiger LH 152/92L (BC Beton-Chemie GmbH & Co. KG, Pyrmonter Str. 56, 32676 Lügde) |
| 0,2 | Gew.-% Natriumcitrat |

mit einem W/F-Wert von 0,28 wird in einem DIN-Mischer gemäß DIN EN 196, Teil 1, aufbereitet.

Mit dieser Rezeptur ergibt sich mit einem W/F-Wert von 0,28 eine Volumenexpansion von ca. 10 %.

Die weiteren Eigenschaften dieses Expansionsbindemittels sind in Tabelle 1 angegeben.

**Tabelle 1**

| Beispiel | W/F-Wert | Volumenexpansion[%] | Ausbreitmaß [cm] | Verarbeitbarkeit [h] | Festigkeit nach 28 d [N/mm²] | Wasserlagerung |
|---|---|---|---|---|---|---|
| 1 | 0,25 | ≈ 10 | steift sofort an | 1'30 | ---- | zerstört |
| 2 | 0,25 | ≈ 20 | 22 | 0'20 | 44 | stabil |
| 3 | 0,28 | ≈ 10 | 25 | 0'40 | 38 | stabil |

Aus der Tabelle ist ersichtlich, daß die erfindungsgemäßen Expansionsbindemittel durch die Zugabe des Natriumcitrats bei pumpfähiger Konsistenz und einer Verarbeitungszeit zwischen 20 min und 40 min je nach Zusammensetzung zwischen 10 % und 20 % Volumenexpansion zeigen, wobei die Probekörper bei Wasserlagerung stabil bleiben.

## Patentansprüche

1. Verfahren zur Steuerung des Erhärtungsprozesses von Expansionszementen des Typs M, **dadurch gekennzeichnet, daß** durch die Zugabe von Zitronensäure, Weinsäure oder ihren Alkalisalzen eine zeitliche Trennung zwischen der Bildung von Ettringit und den CSH/CAH-Phasen dergestalt bewirkt wird, daß die Ettringitbildung weitgehend abgeschlossen ist, wenn die Ausbildung des CSH/CAH-Gefüges beginnt.

2. Expansionszement des Typs M zur Durchführung des Verfahrens nach Anspruch 1, **dadurch gekennzeichnet, daß** er
| | |
|---|---|
| ≥ 50 | Gew.-% C₃A-armen Portlandzement (C₃A ≤ 3 Gew.-%) |
| 7,5 bis 20 | Gew.-% Gips |
| 5 bis 25 | Gew.-% Tonerdezement |
| 0,2 bis 2 | Gew.-% eines Verflüssigers aus der Gruppe der Ligninsulfonsäure oder der Melamin- und Naphthalin-Formaldehyd-Kondensatsulfonate |
| 0,01 bis 1 | Gew.-% Alkalicitrat oder -tartrat |
enthält.

3. Expansionszement nach Anspruch 2, **dadurch gekennzeichnet, daß** das Alkalicitrat Lithium- oder Natriumcitrat ist.

4. Verwendung eines Expansionszements nach einem der Ansprüche 2 oder 3 für die Verfüllung von Hohlräumen, vorzugsweise bei der Herstellung von Bodenankern oder Felsankern.

## Claims

1. Method for controlling the hardening process of expansion cements of the M type, **characterised in that** by adding citric acid, tartaric acid or their alkali metal salts, temporary separation between the formation of ettringite and the CSH/CAH phases is effected such that ettringite formation is largely completed when the formation of the CSH/CAH structure begins.

2. Expansion cement of the M type for carrying out the method according to claim 1, **characterised in that** it contains
| | |
|---|---|
| ≥ 50 | wt.% Portland cement low In C₃A (C₃A ≤ 3 wt.%) |
| 7.5 to 20 | wt.% gypsum |
| 5 to 25 | wt.% aluminous cement |
| 0.2 to 2 | wt.% of a liquefier from the group comprising ligninsulphonic acid or the melamine and naphthalene formaldehyde condensate sulphonates |
| 0.01 to 1 | wt.% alkali metal citrate or tartrate. |

3. Expansion cement according to daim 2, **characterised in that** the alkali metal citrate is lithium citrate or sodium citrate.

4. Use of an expansion cement according to one claims 2 or 3 for filling hollow cavities, preferably for the production of ground anchors or rock anchors.

## Revendications

1. Procédé pour maitriser le processus de durcissement de ciments expansifs du type M, **caractérisé en ce qu'**on provoque par l'addition d'acide citrique, d'acide tartrique ou de leurs sels de métaux alcalins, une séparation dans le temps entre la formation d'ettringite et des phases CSH/CAH de telle manière que la formation d'ettringite soit largement terminée lorsque la formation de la structure CSH/CAH débute.

2. Ciment expansif du type M pour la mise en oeuvre du procédé suivant la revendication 1, **caractérisé en ce qu'**il contient
| | |
|---|---|
| ≥ 50 % | en poids de ciment Portland pauvre en C₃A (C₃A ≤ 3 % en poids) |
| 7,5 à 20 % | en poids de gypse |
| 5 à 25 % | en poids de ciment alumineux |
| 0,2 à 2 % | en poids d'un fluidifiant du groupe de l'acide lignosulfonique ou de sulfonates de condensats mélamine- et naphtaléne-formaldéhyde |
| 0,01 à 1 % | en poids de citrate ou de tartrate de métal alcalin. |

3. Ciment expansif suivant la revendication 2, **caractérisé en ce que** le citrate alcalin est le citrate de lithium ou de sodium.

4. Utilisation d'un ciment expansif suivant les revendications 2 ou 3 pour le remplissage de cavités, de préférence pour la production d'ancres de sol ou d'ancres de roche.
